# EUROPÄISCHE PATENTANMELDUNG

(11) **EP 3 388 278 A1**
(43) Veröffentlichungstag der Anmeldung: **17.10.2018**
(21) Anmeldenummer: 18164916.1
(22) Anmeldetag: 29.03.2018
(51) Int. Cl.: B60L 11/18

(54) **VERFAHREN UND SYSTEM ZUM STEUERN EINES LADEVORGANGS EINES FAHRZEUGS**

(30) Priorität: 12.04.2017 DE 102017206352
(71) Anmelder: AUDI AG, 85045 Ingolstadt (DE)
(72) Erfinder: Spähn, Michael, 85053 Ingolstadt (DE); Schulz, Jens, 93336 Altmannstein (DE); Schlaudraff, Andreas, 80469 München (DE)

(57) **Zusammenfassung**

Die Erfindung betrifft ein System (1) zum Steuern eines Ladevorgangs eines Fahrzeugs (3), umfassend eine Steuereinrichtung (4), welche dazu eingerichtet ist, anhand einer Diebstahlinformation (6) zu überprüfen, ob das Fahrzeug (3) als gestohlen gemeldet ist und in Abhängigkeit von dieser Überprüfung einen Ladevorgang des Fahrzeugs (3) zu steuern, wobei das Fahrzeug (3) selbst die Steuereinrichtung (4) umfasst. Zudem betrifft die Erfindung ein Fahrzeug (3) mit einer solchen Steuereinrichtung (4) sowie ein Verfahren zum Steuern eines Ladevorgangs eines Fahrzeugs (3).

## Beschreibung

Die Erfindung betrifft ein Verfahren und ein System zum Steuern eines Fahrzeugs der in den Oberbegriffen der unabhängigen Patentansprüche angegebenen Ort. Des Weiteren betrifft die Erfindung ein Fahrzeug mit einer Steuereinrichtung zum Steuern eines Ladevorgangs des Fahrzeugs.

Es ist an sich bekannt, bei Elektrofahrzeugen eine Modifizierung bei Ladevorgängen vorzunehmen, insbesondere um bei gestohlenen Elektrofahrzeugen die Chancen zu verbessern, das gestohlene Elektrofahrzeug wieder zurück zu erhalten.

So beschreibt die DE 11 2012 002 869 T5 ein Verfahren zur Steuerung eines Ladevorgangs eines Elektrofahrzeugs. Sobald das Elektrofahrzeug mit einer Ladevorrichtung verbunden worden ist, fordert diese eine eindeutige Fahrzeugkennung von einem Steuergerät des Kraftfahrzeugs an. Die empfangene Fahrzeugkennung überträgt die Ladevorrichtung an eine Authentifizierungsvorrichtung, welche Teil einer fahrzeugexternen Servereinrichtung ist. Die Authentifizierungsvorrichtung bestimmt anhand der Fahrzeugkennung, ob das Elektrofahrzeug als gestohlen gemeldet ist. Die Authentifizierungsvorrichtung überträgt an die Ladevorrichtung ein entsprechendes Signal, welches anzeigt, ob das Elektrofahrzeug gestohlen ist oder nicht. Falls es sich um ein gestohlenes Fahrzeug handeln sollte, verhindert eine Steuereinrichtung der Ladevorrichtung ein Aufladen der Batterie des Elektrofahrzeugs.

Die DE 10 2011 077 472 A1 und die EP 2 693 596 B1 beschreiben ebenfalls jeweilige Verfahren zur Steuerung eines Ladevorgangs eines Elektrofahrzeugs. Sobald das Elektrofahrzeug mit einer Ladestation verbunden worden ist, überprüft eine Steuereinheit der Ladestation, ob das Elektrofahrzeug als gestohlen gemeldet worden ist. Sollte dies der Fall sein, so unterbindet die Steuereinheit der Ladestation einen Ladevorgang des Elektrofahrzeugs.

Die US 2004/0098179 A1 beschreibt ein Verfahren zum Sichern eines Kraftfahrzeugs. Sobald das Kraftfahrzeug zum Aufladen mit einer Ladestation verbunden wird, überprüft eine fahrzeugexterne Steuereinrichtung, ob das Kraftfahrzeug als gestohlen gemeldet ist. Sollte dies der Fall sein, verhindert die fahrzeugexterne Steuereinrichtung ein Abkoppeln des Kraftfahrzeugs von der Ladestation.

Die US 8 102 248 B2 beschreibt ein Verfahren, bei welchem ein Ladevorgang eines Kraftfahrzeugs an einer Ladestation verhindert wird, falls das Kraftfahrzeug als gestohlen gemeldet ist. Die Überprüfung, ob das Kraftfahrzeug als gestohlen gemeldet ist, erfolgt mittels einer Servereinrichtung einer Pol izeistation.

Es ist die Aufgabe der vorliegenden Erfindung, einen verbesserten Diebstahlschutz für Fahrzeuge bereitzustellen.

Diese Aufgabe wird mittels eines Systems und Verfahrens zum Steuern eines Ladevorgangs eines Fahrzeugs sowie mittels eines Fahrzeugs mit einer Steuereinrichtung zum Steuern eines Ladevorgangs des Fahrzeugs mit den Merkmalen der unabhängigen Patentansprüche gelöst. Vorteilhafte Ausgestaltungen mit zweckmäßigen und nicht trivialen Weiterbildungen der Erfindung sind den abhängigen Ansprüchen angegeben.

Das erfindungsgemäße System zum Steuern eines Ladevorgangs eines Fahrzeugs umfasst eine Steuereinrichtung, welche dazu eingerichtet ist, anhand einer Diebstahlinformation zu überprüfen, ob das Fahrzeug als gestohlen gemeldet ist und in Abhängigkeit von dieser Überprüfung einen Ladevorgang des Fahrzeugs zu steuern. Das erfindungsgemäße System zeichnet sich dadurch aus, dass das Fahrzeug selbst die Steuereinrichtung umfasst. Die Ladesteuerung erfolgt erfindungsgemäß also direkt durch das Fahrzeug selbst und ist damit also unabhängig von einem Ladepunkt, einer Ladeart oder einem Ladestandard. Bei dem erfindungsgemäßen System ist es nicht erforderlich, dass sich Ladesäulenbetreiber zum Beispiel mit der Polizei in Deutschland, Österreich, Italien und dergleichen verbinden, um Diebstahlinformation landesübergreifend zu erhalten und bereitstellen zu können.

Bei dem erfindungsgemäßen System kann sobald die Diebstahlinformation fahrzeugseitig vorliegt, die Ladefunktionalität des Fahrzeugs direkt mittels der fahrzeugseitigen Steuereinrichtung beeinflusst werden. Sollte das Fahrzeug gestohlen werden, so kann beispielsweise ein Aufladen des Fahrzeugs auf beliebige Arten eingeschränkt werden, ohne dass zuvor ein Abgleich mit länderspezifischen Diebstahldatenbanken nötig wäre. Vorzugsweise ist die fahrzeugseitige Steuereinrichtung dazu eingerichtet, vor jedem Ladevorgang, zum Beispiel sobald das Fahrzeug mit einer privaten und/oder öffentlichen Ladestation verbunden worden ist, zu überprüfen, ob das Fahrzeug als gestohlen gemeldet ist. Die Diebstahlinformation kann beispielsweise in Form eines elektronischen Merkmals in Form einer Datei fahrzeugseitig hinterlegt sein. Des Weiteren kann beispielsweise in der Steuereinrichtung ein vordefinierter Umfang hinterlegt sein, welcher festlegt, in welcher Form der Ladevorgang des Fahrzeugs im Falle eines gemeldeten Diebstahls zu modifizieren und insbesondere zu verschlechtern ist.

Die Diebstahlinformation kann auf unterschiedlichste Arten im Fahrzeug hinterlegt sein. Vorzugsweise wird die Diebstahlinformation derart im Fahrzeug hinterlegt, dass sie nicht durch Ausbau einer einzigen Komponente, beispielsweise durch den Austausch eines fahrzeugseitigen Ladegeräts, außer Kraft gesetzt werden kann. Darüber hinaus ist das Fahrzeug derart eingerichtet, dass dieses die Diebstahlinformation von verschiedensten Quellen drahtlos, beispielsweise über ein Mobilfunknetz oder auch über eine WLAN-Verbindung, empfangen kann.

Das beschriebene System zum Steuern eines Ladevorgangs eines Fahrzeugs eignet sich also besonders gut zur Diebstahlhemmung durch eine Modifizierung einer Ladefunktion. Das System lässt sich auf alle Produkte bzw. Anwendungen erweitern, die elektrisch aufgeladen werden und über eine Kommunikationsschnittstelle, beispielsweise für ein Mobilfunknetz und/oder ein WLAN, verfügen. Beispielsweise kann das erfindungsgemäße System auch auf E-Bikes, E-Roller, E-Scooter, E-Jetski, E-Boote und dergleichen übertragen werden. Das System kann zum Beispiel auch auf Produkte im Bereich der Unterhaltungselektronik, oft auch als Consumer Electronics bezeichnet, übertragen werden.

Mittels des erfindungsgemäßen Systems ist es also möglich, eine Modifizierung der Ladefunktion des betreffenden Fahrzeugs vorzunehmen, um beispielsweise die Flucht eines Diebs zu erschweren und den Zugriff auf das gestohlene Fahrzeug durch Behörden erheblich erleichtern. Des Weiteren verliert ein gestohlenes Fahrzeug durch die verminderte Ladefunktionalität extrem an Wert, sodass ein Weiterverkauf des gestohlenen Fahrzeugs deutlich schwerer und somit der Anreiz für den Diebstahl deutlich geringer einzustufen ist. Durch die wesentlich geringere Attraktivität des Fahrzeugs für einen Diebstahl sinken auch die Aufwendungen der Versicherungen und damit die Versicherungsklassen dieses Fahrzeugtyps. Das senkt wiederum die Kosten für jeweilige Kunden dieses Fahrzeugtyps.

Eine vorteilhafte Ausführungsform der Erfindung sieht vor, dass das System eine fahrzeugexterne Servereinrichtung aufweist, welche dazu eingerichtet ist, die Diebstahlinformation an das Fahrzeug zu übertragen. Beispielsweise kann ein Hersteller des Fahrzeugs diese fahrzeugexterne Servereinrichtung betreiben, um sicherstellen zu können, dass im Falle eines Diebstahls eine auf der Servereinrichtung eingegangene Diebstahlinformation unmittelbar drahtlos an das Fahrzeug übertragen werden kann. Dadurch kann sichergestellt werden, dass im Falle eines Diebstahls, die Steuereinrichtung besonders frühzeitig anhand der Diebstahlinformation überprüfen kann, ob das Fahrzeug als gestohlen gemeldet ist, um in Abhängigkeit von dieser Überprüfung den Ladevorgang des Fahrzeugs zu steuern, insbesondere so zu modifizieren, dass das Fahrzeug gar nicht oder nur schlecht weiterbewegt werden kann. Es ist auch möglich, dass ein Halter des Fahrzeugs oder ein autorisierter Dritter sich in einem Front-End einloggen bzw die Funktion in einem Front-End steuern kann, um den Diebstahl online an die fahrzeugexterne Servereinrichtung zu übertragen. Dafür muss er beispielsweise nur seine Benutzerkennung und ein zugehöriges Passwort parat haben.

Eine weitere vorteilhafte Ausführungsform der Erfindung sieht vor, dass die fahrzeugexterne Servereinrichtung dazu eingerichtet ist, die Diebstahlinformation von einer Behörde, insbesondere von einer Polizeibehörde, zu empfangen. Beispielsweise kann ein Halter des Fahrzeugs die Polizeibehörde einfach anrufen, infolgedessen diese die Diebstahlinformation an die fahrzeugexterne Servereinrichtung übermittelt. Vorzugsweise ist die fahrzeugexterne Servereinrichtung mit einer Vielzahl von Polizeibehörden in verschiedensten Orten und Ländern vernetzt, sodass eingehende Diebstahlinformationen direkt verarbeitet werden können, infolgedessen die fahrzeugseitige Steuereinrichtung im Falle eines Diebstahls die Lademöglichkeiten des Fahrzeugs so modifizieren kann, dass ein Dieb des Fahrzeugs besonders schnell gefasst werden kann.

In weiterer vorteilhafter Ausgestaltung der Erfindung ist es vorgesehen, dass die fahrzeugexterne Servereinrichtung dazu eingerichtet ist, die Diebstahlinformation von einem mobilen Endgerät, insbesondere von einem Smartphone, zu empfangen. Beispielsweise kann ein Benutzer des Fahrzeugs einfach eine SMS an sein gerade gestohlenes Fahrzeug senden. Alternativ oder zusätzlich ist es auch möglich, dass eine gesonderte App für den Fall eines Diebstahls auf dem Smartphone installiert ist, wobei der Halter des Fahrzeugs einfach nur die App starten und beispielsweise einen vorgesehenen Knopf drücken muss, infolgedessen die Diebstahlinformation direkt an die fahrzeugexterne Servereinrichtung übermittelt wird. Dadurch, dass die fahrzeugexterne Servereinrichtung vorzugsweise dazu eingerichtet ist, die Diebstahlinformation von einem mobilen Endgerät zu empfangen, kann ein Halter des Fahrzeugs im Falle eines Diebstahls besonders schnell reagieren und die Diebstahlinformation über die fahrzeugexterne Servereinrichtung an sein entwendetes Fahrzeug übermitteln lassen, sodass die Steuereinrichtung wiederum aktiv werden kann, um den Ladevorgang des Fahrzeugs zu modifizieren.

Gemäß einer weiteren vorteilhaften Ausführungsform der Erfindung ist es vorgesehen, dass das System ein Smartphone umfasst, welches dazu eingerichtet ist, die Diebstahlinformation zumindest mittelbar an das Fahrzeug zu übertragen. Einerseits kann es vorgesehen sein, dass das Smartphone dazu eingerichtet ist, die Diebstahlinformation, beispielsweise wiederum über eine installierte App, an die fahrzeugexterne Servereinrichtung zu übertragen. Alternativ oder zusätzlich kann das Smartphone aber auch dazu eingerichtet sein, die Diebstahlinformation direkt und ohne Umweg über die fahrzeugexterne Servereinrichtung an das Fahrzeug übertragen. Dadurch, dass das System vorzugsweise das besagte Smartphone umfasst, kann ein Halter des Fahrzeugs im Falle eines Diebstahls besonders schnell reagieren und die Diebstahlinformation an sein gestohlenes Fahrzeug übermitteln lassen.

Eine weitere vorteilhafte Ausführungsform der Erfindung sieht vor, dass die Steuereinrichtung dazu eingerichtet ist, ein Aufladen des Fahrzeugs zu beschränken und/oder zu unterbinden. Beispielsweise kann die Steuereinrichtung dazu eingerichtet sein, ein Aufladen des Fahrzeugs mittels Gleichstrom, mittels Wechselstrom oder auch ein dreiphasiges Laden zu verhindern. Des Weiteren kann die Steuereinrichtung auch dazu eingerichtet sein, unabhängig von der Ladeart, dauerhaft kein Aufladen des Kraftfahrzeugs mehr zu ermöglichen. Zudem kann die Steuereinrichtung auch dazu eingerichtet sein, eine Ladeleistung einzuschränken. Beispielsweise kann die Ladeleistung auf 1 kW beschränkt werden. Im Falle einer 80 kWh-Batterie würde dies bedeuten, dass ein vollständiges Aufladen bei vollständig entleerter Batterie 80 Stunden, also mehr als 3 Tage, in Anspruch nehmen würde. Dadurch, dass die Steuereinrichtung dazu eingerichtet ist, das Aufladen des Fahrzeugs zu beschränken und/oder zu unterbinden, kann im Falle eines Diebstahls auf zuverlässige Weise verhindert werden, dass ein Dieb des Fahrzeugs mit dem Fahrzeug allzu weit fahren kann.

In weiterer vorteilhafter Ausgestaltung der Erfindung ist vorgesehen, dass die Steuereinrichtung dazu eingerichtet ist, eine für ein Aufladen des Fahrzeugs an einer Ladestation erforderliche Authentifizierung zu verhindern. Beispielsweise kann das Fahrzeug grundsätzlich dazu eingerichtet sein, einfach an einer Ladestation angeschlossen zu werden, um dieses dann nach erfolgreicher Authentifizierung beispielsweise bargeldlos aufladen zu können. Dadurch, dass die Steuereinrichtung vorzugsweise dazu eingerichtet ist, eine beim Aufladen des Fahrzeugs an einer Ladestation erforderliche Authentifizierung zu verhindern, wird einem Dieb die Möglichkeit genommen, das Fahrzeug auf Kosten des Halters aufzuladen.

Eine weitere vorteilhafte Ausführungsform der Erfindung sieht vor, dass die Steuereinrichtung dazu eingerichtet ist, eine Entriegelung eines in das Fahrzeug eingesteckten Ladesteckers zu verhindern. Dadurch kann das gestohlene Fahrzeug auf zuverlässige Weise an Ort und Stelle festgehalten werden.

Gemäß einer weiteren vorteilhaften Ausführungsform der Erfindung ist es vorgesehen, dass die Steuereinrichtung dazu eingerichtet ist, das Fahrzeug über eine an das Fahrzeug angeschlossene Ladesäule zu entladen. Zur weiteren Verringerung der Fahrzeugreichweite des gestohlenes Fahrzeugs kann also sogar eine Fahrzeugbatterie des Kraftfahrzeugs an geeigneten Ladestationen entladen werden, sodass das Fahrzeug gar nicht mehr wegbewegt werden kann.

Das erfindungsgemäße Fahrzeug umfasst eine Steuereinrichtung, welche dazu eingerichtet ist, anhand einer Diebstahlinformation zu überprüfen, ob das Fahrzeug als gestohlen gemeldet ist und in Abhängigkeit von dieser Überprüfung einen Ladevorgang des Fahrzeugs zu steuern. Die im Zusammenhang mit dem erfindungsgemäßen System erläuterten vorteilhaften Ausführungsformen der Steuereinrichtung gelten gleichermaßen für die Steuereinrichtung des erfindungsgemäßen Fahrzeugs. Bei dem Fahrzeug handelt es sich vorzugsweise um ein Kraftfahrzeug, insbesondere um einen Kraftwagen.

Bei dem erfindungsgemäßen Verfahren zum Steuern eines Ladevorgangs eines Fahrzeugs wird anhand einer Diebstahlinformation überprüft, ob das Fahrzeug als gestohlen gemeldet ist. In Abhängigkeit von dieser Überprüfung wird ein Ladevorgang des Fahrzeugs gesteuert. Das erfindungsgemäße Verfahren zeichnet sich dadurch aus, dass die Überprüfung, ob das Fahrzeug als gestohlen gemeldet ist, und die Steuerung des Ladevorgangs mittels einer Steuereinrichtung des Fahrzeugs durchgeführt wird. Vorteilhafte Ausgestaltungen des erfindungsgemäßen Systems sind als vorteilhafte Ausgestaltungen des erfindungsgemäßen Verfahrens und umgekehrt anzusehen, wobei das System und/oder das Fahrzeug insbesondere Mittel zur Durchführung der Verfahrensschritte aufweist.

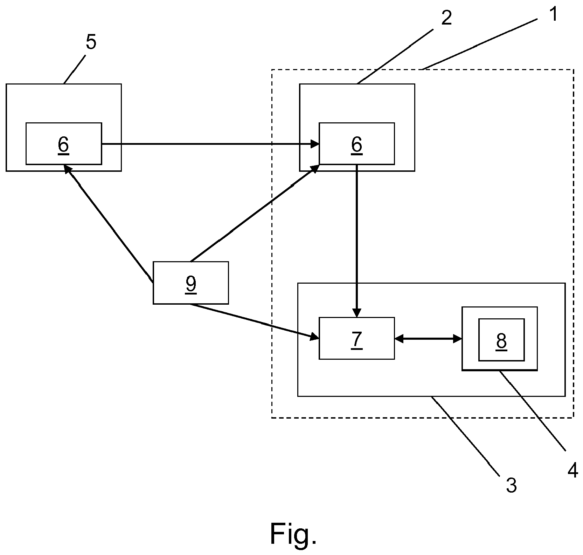

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombination sowie die nachfolgend in der Figurenbeschreibung und/oder in den Figuren alleine gezeigten Merkmale und Merkmalskombinationen sind nicht nur in der angegebenen Kombination, sondern auch in Alleinstellung oder auch in anderen Kombinationen verwendbar, ohne den Rahmen der Erfindung zu verlassen.

Die Zeichnung zeigt in der einzigen Figur eine schematische Darstellung eines Systems zur Diebstahlhemmung eines Fahrzeugs, welches eine fahrzeugseitige Steuereinrichtung aufweist, die dazu eingerichtet ist, im Falle einer vorliegenden Diebstahlinformation einen Ladevorgang des Fahrzeugs zu modifizieren.

Ein System 1 umfasst eine fahrzeugexterne Servereinrichtung 2 und mehrere elektrisch angetriebene Fahrzeuge 3, wobei der Einfachheit halber vorliegen nur eines der Fahrzeuge 3 dargestellt ist. Das System 1 dient dazu, eine Diebstahlhemmung bei dem Fahrzeug 3 vornehmen zu können, falls dieses gestohlen worden ist. Das Fahrzeug 3 umfasst eine Steuereinrichtung 4, welche beispielsweise Teil einer fahrzeugseitigen, hier nicht näher bezeichneten Ladeeinrichtung sein kann. Die Steuereinrichtung 4 kann insbesondere im Falle eines gemeldeten Diebstahls des Fahrzeugs 3 auf unterschiedlichste Arten auf einen Ladevorgang des Fahrzeugs 3 einwirken.

Eine Behörde in Form einer Polizeistation 5 ist zudem schematisch dargestellt. Ein Halter des Fahrzeugs 3 kann auf der Polizeistation 5 anrufen, um einen Diebstahl seines Fahrzeugs 3 zu melden. Die Polizeibehörde 5 hinterlegt daraufhin einem elektronische Diebstahlinformation 6, welche sodann von der Polizeistation 5 an die fahrzeugexterne Servereinrichtung 2 übertragen wird.

Beispielsweise ist es auch möglich, dass der Halter des Fahrzeugs 3 den Diebstahl elektronisch und drahtlos der Polizeistation 5 mittels eines hier nicht dargestellten, als Front-End 9 dienenden Smartphones meldet. Auf dem Frontend 9, z.B.in Form des besagten Smartphones, welches auch Teil des Systems 1 sein kann, kann beispielsweise eine App installiert sein, mittels welcher durch einen einfachen Knopfdruck die Diebstahlinformation 6 an die nächstgelegene Polizeistation, im vorliegenden Beispiel die hier dargestellte Polizeistation 5, gesendet werden kann. Alternativ oder zusätzlich ist es auch möglich, dass der Halter des gerade gestohlenen Fahrzeugs 3 über sein Smartphone direkt und ohne Umwege die Diebstahlinformation 6 an sein gestohlenes Fahrzeug 3 übertragen kann.

Wurde die Diebstahlinformation 6 an die fahrzeugexterne Servereinrichtung 2 übertragen, so kann sie die Diebstahlinformation 6 selbst beispielsweise in einem fahrzeugseitigen Speicher 7 hinterlegen. Diese Hinterlegung erfolgt vorzugweise drahtlos, beispielsweise über ein Mobilfunknetz oder dergleichen. Im Fahrzeug 3 können auch mehrere dieser Speicher 7 an unterschiedlichsten Orten vorgesehen sein, sodass sie Diebstahlinformation 6 verteilt und besonders schwer lokalisierbar im Fahrzeug 3 hinterlegt wird.

Wann immer das gestohlene Fahrzeug 3 mit einer Lademöglichkeit, wie beispielsweise einer öffentlichen Ladestation oder einer privaten Ladestation, verbunden wird, startet eine in der Steuereinrichtung 4 hinterlegte Logik 8 zur Diebstahlhemmung. Sobald also das gestohlene Fahrzeug 3 mit einer Lademöglichkeit gekoppelt worden ist, überprüft die Steuereinrichtung 4 gemäß der Logik 8 zunächst einmal, ob in dem fahrzeugseitigen Speicher 7 oder auch in weiteren hier nicht dargestellten fahrzeugseitigen Speichern die besagte Diebstahlinformation 6 hinterlegt ist. Sollte die Diebstahlinformation 6 nicht hinterlegt sein, so kann das Fahrzeug 3 problemlos geladen werden.

Sollte hingegen die Diebstahlinformation 6 fahrzeugseitig hinterlegt sein, so modifiziert die Steuereinrichtung 4 einen Ladevorgang derart, dass eine Weiterfahrt mit dem Fahrzeug 3 erschwert wird.

Alternativ kann bereits beim Einbringen der Information 6 die Steuereinrichtung 4 entsprechend modifiziert werden und nicht erst beim Start des Ladevorgangs. Alternativ kann zudem eine entsprechende Information im Kraftfahrzeug liegen, die besagt, dass das Fahrzeug 3 nicht gestohlen ist. Diese Information läuft nach einer vorgegebenen Zeit ab. Wird diese Information nicht rechtzeitig vor Ablauf aktualisiert, wird die Ladefunktion an privaten und/oder öffentlichen Ladepunkten, wie oben beschrieben, modifiziert.

Die Steuereinrichtung 4 kann eine Ladeart einschränken, sodass das Fahrzeug 3 beispielsweise nicht mehr mit Gleichstrom, nicht mehr mit Wechselstrom oder auch nicht mehr dreiphasig geladen werden kann. Zudem ist es auch möglich, dass die Steuereinrichtung 4 gar kein Aufladen des Fahrzeugs 3 mehr ermöglicht. Zudem ist es auch möglich, dass sie Steuereinrichtung 4 eine Ladeleistung, gemäß welcher eine Batterie des Fahrzeugs 3 aufgeladen werden kann, limitiert. Beispielsweise kann eine Beschränkung auf 1 kW vorgenommen werden, sodass bei einer 80 kWh-Batterie ein vollständiges Laden der zuvor vollständig entladenen Batterie 80 Stunden in Anspruch nehmen würde.

Zudem kann es auch vorgesehen sein, dass die Steuereinrichtung 4 eine Authentifizierung, z.B. eine Plug & Charge Authentifizierung, durch das Fahrzeug 3 unterbindet. Wann immer nach dem Anschließen des Fahrzeugs 3 an eine Ladestation eine Authentifizierung durch das Fahrzeug 3 notwendig wäre, kann die Steuereinrichtung 4 also verhindern, dass sich das Fahrzeug 3 erfolgreich authentifizieren kann. Infolgedessen kann das Fahrzeug 3 an derartigen Ladestation gar nicht mehr aufgeladen werden.

Zudem kann die Steuereinrichtung 4 auch beispielsweise verhindern, dass ein Ladestecker vom Fahrzeug 3 entriegelt und abgezogen werden kann. Auf diese Weise kann die Steuereinrichtung 4 dafür sorgen, dass das Fahrzeug 3 nicht mehr ohne weiteres von dem betreffenden Ladepunkt, z.B. einer privaten oder öffentlichen Ladesäule entfernt werden kann. Zudem kann die Steuereinrichtung 4 auch dazu eingerichtet sein, zur weiteren Verringerung der Reichweite des gestohlenen Fahrzeugs 3 eine Batterie des Fahrzeugs 3 zu entladen, sobald das Fahrzeug 3 an eine dafür geeignete Ladestation angeschlossen worden ist.

Wird das Fahrzeug 3 als gestohlen gemeldet, so kann beispielsweise über Tracking-Funktionalitäten der Standort des Fahrzeugs 3 verfolgt werden. Beispielsweise kann ein Halter des Fahrzeugs 3 den Standort des gestohlenen Fahrzeugs 3 direkt über sein Smartphone verfolgen. Um das Vorankommen des Fahrzeugs 3 zu unterbinden, kann die fahrzeugseitige Steuereinrichtung 4 eine oder mehrere der oben beschriebenen Maßnahmen ergreifen. Oder hat beispielsweise eine Person eine Straftat begangen und flüchtet in einem derartigen Fahrzeug 3, so kann über die oben beschriebenen Maßnahmen ebenfalls das Laden einer Batterie des Fahrzeugs 3 erschwert und damit der Zugriff durch Behörden auf die flüchtende Person deutlich erleichtert werden. Grundsätzlich kann durch die Modifizierbarkeit unterschiedlichster Ladefunktion des betreffenden Fahrzeugs 3 ein vorankommen des Fahrzeugs 3 auf einfache und effiziente Weise erschwert werden.
Zudem ist es auch möglich, dass das Fahrzeug 3 einen Diebstahl oder einen Diebstahlversuch selbst erkennt und die Information 6 fahrzeugseitig selbst hinterlegt. Anschließend modifiziert die Steuereinrichtung 4 einen Ladevorgang derart, dass eine Weiterfahrt mit dem Fahrzeug 3 erschwert wird. Diese Information 6 wird im Fahrzeug 3 durch das Fehlen eines Merkmals abgebildet, z.B. durch ein zeitlich begrenztes Zertifikat, welches im Regelfall erneuert wird. Bei Ablauf des Zertifikates wird die Ladefunktion wie beschrieben modifiziert.

## Patentansprüche

1. System (1) zum Steuern eines Ladevorgangs eines Fahrzeugs (3), umfassend eine Steuereinrichtung (4), welche dazu eingerichtet ist, anhand einer Diebstahlinformation (6) zu überprüfen, ob das Fahrzeug (3) als gestohlen gemeldet ist und in Abhängigkeit von dieser Überprüfung einen Ladevorgang des Fahrzeugs (3) zu steuern,
**dadurch gekennzeichnet, dass**
das Fahrzeug (3) selbst die Steuereinrichtung (4) umfasst.

2. System (1) nach Anspruch 1,
**dadurch gekennzeichnet, dass**
das System (1) eine fahrzeugexterne Servereinrichtung (2) aufweist, welche dazu eingerichtet ist, die Diebstahlinformation (6) an das Fahrzeug (3) zu übertragen.

3. System (1) nach Anspruch 2,
**dadurch gekennzeichnet, dass**
die fahrzeugexterne Servereinrichtung (2) dazu eingerichtet ist, die Diebstahlinformation (6) von einer Behörde (5), insbesondere von einer Polizeibehörde, zu empfangen.

4. System (1) nach Anspruch 2 oder 3,
**dadurch gekennzeichnet, dass**
die fahrzeugexterne Servereinrichtung (2) dazu eingerichtet ist, die Diebstahlinformation (6) von einem mobilen Endgerät, insbesondere von einem Smartphone, zu empfangen.

5. System (1) nach einem der vorhergehenden Ansprüche,
**dadurch gekennzeichnet, dass**
das System (1) ein Smartphone umfasst, welches dazu eingerichtet ist die Diebstahlinformation (6) direkt oder zumindest mittelbar an das Fahrzeug (3) zu übertragen.

6. System (1) nach einem der vorhergehenden Ansprüche,
**dadurch gekennzeichnet, dass**
die Steuereinrichtung (4) dazu eingerichtet ist, ein Aufladen des Fahrzeugs (3) zu beschränken und/oder zu unterbinden.

7. System (1) nach einem der vorhergehenden Ansprüche,
**dadurch gekennzeichnet, dass**
die Steuereinrichtung (4) dazu eingerichtet ist, eine für ein Aufladen des Fahrzeugs (3) an einer privaten und/oder öffentlichen Ladestation erforderliche Authentifizierung zu verhindern.

8. System (1) nach einem der vorhergehenden Ansprüche,
**dadurch gekennzeichnet, dass**
die Steuereinrichtung (4) dazu eingerichtet ist, eine Entriegelung eines in das Fahrzeug (3) eingesteckten Ladesteckers zu verhindern.

9. System (1) nach einem der vorhergehenden Ansprüche,
**dadurch gekennzeichnet, dass**
die Steuereinrichtung (4) dazu eingerichtet ist, das Fahrzeug (3) über eine an das Fahrzeug (3) angeschlossene Ladesäule zu entladen.

10. Fahrzeug (3) mit einer Steuereinrichtung (4), welche dazu eingerichtet ist, anhand einer Diebstahlinformation (6) zu überprüfen, ob das Fahrzeug (3) als gestohlen gemeldet ist und in Abhängigkeit von dieser Überprüfung einen Ladevorgang des Fahrzeugs (3) zu steuern.

11. Verfahren zum Steuern eines Ladevorgangs eines Fahrzeugs (3), bei welchem anhand einer Diebstahlinformation (6) überprüft wird, ob das Fahrzeug (3) als gestohlen gemeldet ist und in Abhängigkeit von dieser Überprüfung ein Ladevorgang des Fahrzeugs (3) gesteuert wird, **dadurch gekennzeichnet, dass**
die Überprüfung, ob das Fahrzeug (3) als gestohlen gemeldet ist, und die Steuerung des Ladevorgangs mittels einer Steuereinrichtung (4) des Fahrzeugs (3) durchgeführt wird.
